# EUROPÄISCHE PATENTSCHRIFT

(11) **EP 1 800 832 B1**
(45) Veröffentlichungstag und Bekanntmachung des Hinweises auf die Patenterteilung: **19.08.2009**
(21) Anmeldenummer: 06026375.3
(22) Anmeldetag: 20.12.2006
(51) Int. Cl.: B29C 47/88

(54) **Innenkühlkörper für eine Blasfolienanlage, Blasfolienanlage und Verfahren zum Herstellen einer Blasfolie**
Cooling mandrel for blown film moulding station, blown film moulding station and method for manufacturing a blown film
Mandrin de refroidissement pour installation d'extrusion-soufflage d'une feuille tubulaire, installation d'extrusion-soufflage d'une feuille tubulaire et procédé de fabrication d'une feuille tubulaire

(30) Priorität: 20.12.2005 DE 102005060979
(43) Veröffentlichungstag der Anmeldung: 27.06.2007
(73) Patentinhaber: Kiefel Extrusion GmbH, 67547 Worms (DE)
(72) Erfinder: Hennes, Jochen, 60594 Frankfurt (DE)
(74) Vertreter: Castell, Klaus

(56) Entgegenhaltungen:
- EP-A- 1 595 686
- DE-A1- 3 820 530
- GB-A- 2 166 081
- JP-A- 60 049 911
- JP-A- 60 125 623
- NL-A- 7 802 372
- US-A- 4 204 819
- US-A1- 5 576 029

## Beschreibung

Die Erfindung betrifft einen Innenkühlkörper für eine Blasfolienanlage, eine Blasfolienanlage als solche und ein Verfahren zum Herstellen eines Blasfolienschlauchs.

Blasfolienanlagen werden dazu eingesetzt, aus einem thermoplastischen Kunststoff großformatige Folien in Form von Schläuchen herzustellen.

Die DE 1 211 379 stellt eine Anlage vor, bei welcher ein Schlauch aus einer Ringschlitzdüse hergestellt wird. Der Schlauch wird durch Zufuhr von Blasluft aufgeweitet, wobei die Blasluft in den Schlauch zwischen der Düse und in einem durch Wasser gekühlten Kühlkörper eingeführt wird. Die Blasluft zur Aufweitung der Blasfolie wird durch einen doppelwandigen, mit Wasser durchflossenen Kühlkörper gekühlt. Diese gekühlte Luft kann der Blasfolie Wärme entziehen.

Die DE 26 08 311 A1 zeigt eine Anlage, bei welcher die Folie an ihrer Innenseite durch einen mit Wasser gekühlten Kühlkörper und an der Außenseite durch direkte Berührung mit Wasser gekühlt wird. Bei der Außenkühlung läuft das Wasser an der Folie entlang, daher wird die Kühltechnik nur für Anlagen eingesetzt, welche von oben nach unten extrudieren.

Die DE 39 03 174 A1 zeigt eine Blasfolienanlage, bei welcher zur Innenkühlung des Folienschlauchs ein Kühlzylinder vorgesehen ist, welcher an vier diskreten Positionen - über die Höhe des Zylinders verteilt - Kühlluftnuten um den Umfang des Zylinders verlaufen.

Die DE 29 24 897 A1 zeigt einen zylindrischen Stabilisator für Harzblasen, welcher den Folienschlauch von innen beheiztDer innere Stabilisator weist konkave und konvexe, eingravierte beziehungsweise eingeschnittene Muster insbesondere in Form von Rillen auf. Zahlreiche Kontakte zwischen der Folie und den Oberflächenrillen konnten zum damaligen Zeitpunkt in Kauf genommen werden, vor allem weil der Stabilisator etwa die gleiche Temperatur hatte wie die Folie. Außerhalb der Folie ist ein herkömmlicher Kühlungsring zur Außenkühlung vorgesehen. Dasselbe gilt für die inhaltlich deckungsgleiche FR 2 440 266.

Die US 5,576,029 schlägt einen Innenkühlkörper vor, der aus mehreren ringförmigen Elementen zusammengesetzt ist.

Die DE 1 504 648 zeigt eine Anlage zum Herstellen einer Schlauchfolie, bei welcher Blasluft um einen wassergekühlten Innenkörper mit einer sandgestrahlten Oberfläche entlang läuft.

Weitere Anlagen sind bekannt aus der US 3,650,644, der AT 315 472, der DE 26 39 551 A1 und der DE 38 15 415 A1.

Der Erfindung liegt die Aufgabe zugrunde, die bekannten Verfahren und Vorrichtungen zum Herstellen von Blasfolien zu verbessern.

Diese Aufgabe löst ein Innenkühlkörper für eine Blasfolienanlage mit einer Mantelfläche, wobei sich die Mantelfläche von einem Fußbereich (6) zu einem Kopfbereich (7) hin aufweitet und wobei über ihren Verlauf offene Strömungskanäle in der Mantelfläche vorgesehen sind, deren Verlauf sich zumindest über einen Teil einer Längserstreckung der Innenkühlkörpers erstreckt.

Diesem Aspekt der Erfindung liegt die Erkenntnis zugrunde, dass das Vorsehen von Strömungskanälen in der Mantelfläche des Innenkühlkörpers Turbulenzen erzeugt, welche die Polsterwirkung der eingeblasenen Luft verbessern, weil sie in ihrem Verlauf offen sind. Dadurch wird zumindest bei einem überwiegenden Bereich der Blasfolie eine Berührung zwischen der Blasfolie und dem Kühlkörper vermieden, obwohl sich der Kühlkörper vom Fußbereich hin zum Kopfbereich aufweitet, die entlanglaufende Folie also ausweichen muss. Selbst wenn ein kurzzeitiges Anliegen des Folienschlauchs auf einer Teilfläche erfolgt, ist dies jedoch relativ unproblematisch, da die Strömungskanäle nicht senkrecht zur Längserstreckung des Zylinders liegen, sondern eine Komponente aufweisen, welche sich auf die Längsachse des Innenkühlkörpers projizieren lässt.

Zudem bewirken die Turbulenzen zwischen dem Blasfolienschlauch und dem Innenkühlkörper einen erhöhten Wärmetransport, wodurch der Blasfolienschlauch schneller abkühlt. Hierdurch kann ein hoher Durchsatz erreicht werden.

Der Vollständigkeit halber sei darauf hingewiesen, dass eine absolute Vermeidung von Berührungen zwischen dem Blasfolienschlauch und dem Innenkühlkörper nicht unbedingt erforderlich ist. Die Blasfolie erhält jedoch eine bessere Qualität, wenn zumindest unkontrollierte Berührungen vermieden werden. In einigen Fällen kann es sogar erwünscht sein, eine kontrollierte Berührung herbei zu führen, um bestimmte Eigenschaften der Folie zu erreichen, beispielsweise eine erhöhte Oberflächenrauheit.

Bevorzugt hat der Innenkühlkörper für eine Blasfolienanlage mit einer Mantelfläche eine innen an die Mantelfläche anschließende Kühlfluid-Flächenführung, wobei die Kühlfluid-Flächenführung einen ringförmigen Querschnitt mit einer darin befindlichen Luftführung aufweist.

Begrifflich sei hierzu erläutert, dass mit einer "innen" an die Mantelfläche angrenzenden Fluidführung eine solche gemeint ist, welche näher zu einer Längsachse des Innenkühlkörpers liegt. In der Regel wird der Innenkühlkörper im wesentlichen rotationssymmetrisch sein und eine Längsachse haben. In diesem Falle ist mit einer "innen" benachbarten Lage eine solche Lage gemeint, welche radial innen innerhalb der Mantelfläche angeordnet ist.

Weiter sei begrifflich erläutert, dass eine "Kühlfluid-Flächenführung" eine Führung für ein beliebiges Kühlfluid darstellen soll, insbesondere für Wasser, welche es dem Kühlfluid ermöglicht, flächig mit der Oberfläche des Innenkühlkörpers zusammenzuwirken, um die daran entlang strömende Luft zu kühlen, so dass der darum befindlichen Folie in Form des Blasfolienschlauchs Temperatur entzogen werden kann.

Der vorgestellte Aspekt beruht auf der Erkenntnis, dass ein auf diese Weise gestalteter Innenaufbau des Innenkühlkörpers besonders vorteilhaft ist. Innerhalb des Blasfolienschlauchs stehen nur äußerst beschränkte Freiräume zum Einbringen von Kühlmittel zur Verfügung. Ein wie vorstehend beschrieben innenstrukturierter Innenkühlkörper hat den Vorteil, dass die Kühlung der Kühlkörperoberfläche über Wasser erfolgt, was besonders effizient ist. Gleichzeitig wird das Wasser in einem ringförmigen Querschnitt durch den Innenkühlkörper geführt, so dass sich im Inneren der Wasserführung Platz für eine Luftführung ergibt. Die Luftführung kann zum einen das Wasser radial von innen noch weiter abkühlen. Außerdem kann die innere Luftführung, beispielsweise ausgestaltet als eine zentrale Luftröhre, dazu verwendet werden, Blasluft an den Kopf des Innenkühlkörpers zu transportieren. Dort kann sie zur Polsterströmung der Blasluft hinzugefügt werden, beispielsweise in diese eingeleitet werden, so dass sich am Kopf des Innenkühlkörpers eine erhöhte Luftströmung ergibt. Diese kann Platz sparend dazu genutzt werden, den Blasfolienschlauch aufzuweiten.

Eine weitere effektive Ausnutzung des zur Verfügung stehenden Raumes wird erreicht, wenn in der Luftführung eine Kühlfluidleitung vorgesehen ist, die an die Kühlfluid-Flächenführung angeschlossen ist. Beispielsweise kann ein Rohr oder ein Schlauch für das Kühlfluid durch die zentrale Luftführung verlaufen. Eine solche Leitung ist auch leicht zu warten, da sie in der Luftführung angeordnet ist, also relativ frei zugänglich ist.

Bevorzugt hat der Innenkühlkörper für eine Blasfolienanlage eine Kühlfluid-Flächenführung mit einem ringförmigen Querschnitt in einem doppelwandigen Mantel.

Es wurde vorstehend bereits erläutert, dass das Kühlmittel oft besonders raumsparend im Inneren des Innenkühlkörpers geführt werden muss, da innerhalb des Blasfolienschlauchs mitunter nur geringer Raum zur Verfügung steht. Wenn die Kühlfluid-Flächenführung in einem doppelwandigen Mantel des Innenkühlkörpers ausgeführt ist, ist nicht nur die Konstruktion des Innenkühlkörpers recht einfach, da zusätzliche Leitungen entfallen, sondern das Kühlfluid steht auch in direktem Kontakt mit der äußeren Doppelwand des Innenkühlkörpers, also mit dessen Oberflächenwand.

Es wird vorgeschlagen, dass der Innenkühlkörper für eine Blasfolienanlage eine Länge von 0,5 m oder von etwa 1 m bis etwa 3 m und eine Kegelstumpfform hat.

Es hat sich herausgestellt, dass eine Kegelstumpfform für einen Innenkühlkörper insbesondere dann sehr vorteilhaft ist, wenn dieser über eine große Baulänge verfügt. Auf diese Weise kann eine kontinuierliche Aufweitung des Blasfolienschlauchs bereits im Bereich der unteren Abkühlung erfolgen, also dort, wo mit der Blasluft eine Polsterströmung für den Blasfolienschlauch um den Innenkühlkörper herum erzeugt wird. Trotz des sich aufweitenden Umfangs des Innenkühlkörpers haben sich bei Versuchen überraschend gute Folienqualitäten hinsichtlich der Folienoberfläche ergeben. Durch den langen, konusförmigen Innenkühlkörper scheint sich der Blasfolienschlauch besonders gleichmäßig zu erweitern.

Vorteilhafte Messwerte haben sich bei Messungen insbesondere für Längen ab 0,5 m ergeben, insbesondere ab 1 m, auch um etwa 1,5 m herum.

Es sei darauf hingewiesen, dass eine "Kegelstumpfform" nicht im mathematisch exakten Sinne verstanden werden soll. Vielmehr lassen sich vorteilhafte Ausführungsvarianten schon dadurch erreichen, dass der Innenkühlkörper über seine Länge zumindest überwiegend einen den Umfang vergrößernden Oberflächengradienten aufweist, dass also der Innenkühlkörper über seine Länge betrachtet insgesamt mehr Streckenabschnitte aufweist, an welchen sich der Umfang erweitert, als solche, an welchen sich der Umfang verringert. Insbesondere sei an eine Form für den Innenkühlkörper gedacht, bei welcher sich der Umfang über mindestens 70 Prozent, 80 Prozent oder 90 Prozent der Länge zwischen einem Fuß und einem Kopf erweitert. Bei Versuchen des Erfinders hat sich außerdem eine leichte Tonnenform als vorteilhaft herausgestellt, also eine Form, bei welcher der Umfangszuwachs im Bereich des Fußes und/oder im Bereich auf etwa halber Höhe des Innenkühlkörpers größer ist als im oberen Bereich des Innenkühlkörpers, also zum Kopf hin.

In einer bevorzugten Ausführungsform hat der Innenkühlkörper für eine Blasfolienanlage eine Parallel-Luftführung zu einer den Innenkühlkörper im Betrieb umgebenden Polsterströmung, und zwar mit einem an einem Kopf des Innenkühlkörpers vorgesehenen Luftauslass, welcher die Parallel-Luftführung zur Polsterströmung zuführt.

Es wurde vorstehend bereits erläutert, dass die räumlichen Verhältnisse innerhalb des Blasfolienschlauchs oft recht beengt sind. Dabei stellt sich die Aufgabe, eine Polsterströmung um den Kühlkörper zu erreichen, wobei jenseits des Kühlkörpers, als bei nach oben extrudierenden Anlagen oberhalb des Kopfes des Kühlkörpers, eine Aufweitung des Blasfolienschlauchs erfolgen soll, bevorzugt sogar schon auf der Höhe des Innenkühlkörpers.

Hierzu hat es sich als vorteilhaft herausgestellt, einen Teil der Blasluft durch den Innenkühlkörper hindurch vom Fuß zu dessen Kopf zu führen und dort der Polsterströmung zuzuführen. Im Ergebnis kann auf diese Weise ein sehr großer Luftstrom durch eine feste Rohrleitung oder eine ähnliche Führung innerhalb des Innenkühlkörpers zu dessen Kopf hin erfolgen. Diese Strömung kann aufgrund der festen Begrenzung praktisch beliebig reguliert und insbesondere auch sehr hoch eingestellt werden. Wenn die Strömung um den Kühlkörper herum, also die Polsterströmung zur Folie, zu stark erhöht wird, besteht demgegenüber die Gefahr, dass die Folie unkontrolliert aufgeweitet wird und in der Qualität nachlässt.

Um einen möglichst gleichmäßigen Luftaustritt am Kopf des Innenkühlkörpers zu erreichen, wird vorgeschlagen, dass der Luftauslass für die Parallel-Luftführung über einen Umfang des Kopfes des Innenkühlkörpers verteilt ist.

Außerdem wird vorgeschlagen, dass der Innenkühlkörper für eine Blasfolienanlage eine Vielzahl von Strömungsverwirbelerhebungen mit Kanäle begrenzenden Seiten aufweist.

Begrifflich sei hierzu erläutert, dass als eine "Strömungsverwirbelerhebung" eine makroskopische Erhebung von mindestens 3 mm, bevorzugt von mindestens 5 mm, insbesondere von mindestens 10 mm, verstanden wird, welche somit recht deutlich nach außen, also beispielsweise radial, an der Oberfläche des Innenkühlkörpers absteht. Eine solche Erhebung führt dazu, dass die im Betrieb der Blasfolienanlage dort entlangströmende Polsterströmung verwirbelt wird. Insbesondere kann sie hierdurch von einer laminaren Strömung in eine turbulente Strömung übergehen, oder die Turbulenz kann erhöht werden.

Durch eine geschickte Verteilung der Vielzahl von Strömungsverwirbelerhebungen wird ein recht stabiles Luftpolster um den Innenkühlkörper herum geschaffen, so dass durch die Regelung von Temperatur, Durchsatz des Extruders, Luftströmung und Werkstoff sehr genau bestimmbar ist, ob und wo die Folie in Kontakt mit dem Innenkühlkörper treten kann. Die stark verwirbelte Luftströmung sorgt für ein recht kräftiges Polster für den Blasfolienschlauch.

Dadurch, dass sich an die Seiten der Erhebungen Kanäle anschließen, wird ein übermäßiger Staudruck der Polsterströmung vermieden. Vielmehr kann bei geeigneter Gestaltung ein Netz von miteinander verbundenen Kanälen vorliegen, durch welche die Polsterströmung mit relativ geringem Strömungswiderstand, aber dennoch großer Verwirbelung, strömen kann.

Bevorzugt hat der Innenkühlkörper eine Vielzahl von Strömungsverwirbelerhebungen in Form von bezüglich einer Längserstreckung des Innenkühlkörpers schräg liegenden Rauten.

Vorstehend wurde bereits erläutert, dass die Strömungsverwirbelerhebungen zu einer Kräftigung der Polsterwirkung der Blasluft um die Oberfläche des Innenkühlkörpers herum führen können. Unabhängig davon, ob Kanäle vorliegen und in welcher Form diese Kanäle gestaltet sind, hat sich bei Versuchen des Erfinders herausgestellt, dass die Strömungsverwirbelerhebungen besonders vorteilhaft als rautenförmige Erhebungen ausgebildet sind. Dies bedeutet, dass bei einer Abwicklung des Innenkühlkörpermantels die Kontur der Erhebung als eine Raute abgewickelt wird. Eine Raute hat vier Ecken, wobei als "schräg liegend" aufgefasst wird, wenn eine Verbindung zwischen zwei sich gegenüberliegenden Ecken der Raute sich nicht parallel auf die Längserstreckungsachse des Innenkühlkörpers projizieren lässt.

Bei einigen Versuchen des Erfinders hat sich gezeigt, dass auch koaxial zur Längserstreckung liegende Erhebungen, insbesondere in Form von Vierecken, besonders in Form von Rauten, zu einer guten Polsterung bei gleichzeitig großem möglichem Durchsatz führen können. Bei anderen Versuchen hat sich jedoch gezeigt, dass durch ein geringes Ausdrehen der Vierecke oder generell der geometrischen Körper, welche die Erhebungen bilden, eine sehr gute Polsterwirkung erreicht werden konnte.

Es sei ausdrücklich darauf hingewiesen, dass sich die vorteilhaften Wirkungen nicht nur bei Rauten zeigen. Insgesamt wurden Polyeder als vorteilhafte Geometrien für die Erhebungen beobachtet. Insbesondere wurden Flächen mit Dreiecken, mit Vierecken, mit Fünfecken oder mit Sechsecken als besonders vorteilhaft herausgearbeitet. Die Begrenzungskanten zwischen den Ecken können, müssen aber nicht, gerade sein. Vielmehr haben sich auch konvexe und insbesondere konkave Kantengestaltungen zwischen den Ecken als vorteilhaft erwiesen.

Es ist von Vorteil, wenn der Innenkühlkörper eine Vielzahl von Strömungsverwirbelerhebungen aufweist, welche in Reihen um einen Mantelumfang angeordnet sind, und zwar in mehr als zwanzig Reihen über eine Länge des Innenkühlkörpers, bevorzugt in mehr als dreißig Reihen, besonders bevorzugt in mehr als vierzig Reihen.

Es hat sich bei Messungen an Prototypen herausgestellt, dass gerade durch das Vorsehen von einer bestimmten Mindestanzahl von Reihen von Erhebungen der Polstereffekt besonders stabil wird. Wenn die Luft beim Entlangströmen entlang der Längserstreckung des Innenkühlkörpers nur eine geringe Anzahl von Reihen von Strömungsverwirbelerhebungen passiert, beispielsweise nur fünfzehn oder sechzehn Reihen, hat sich gezeigt, dass die Polsterwirkung unter Umständen noch nicht ausreichend stabil ist. Sobald jedoch mehr Reihen vorgesehen werden, springt die Stabilität der Polsterströmung bei geeigneter Gestaltung enorm.

Bevorzugt weist der Innenkühlkörper ein Flächenverhältnis zwischen Strömungsverwirbelerhebungen und bezüglich eines um diese definierten Mantels vorgesehenen Eintiefungen von höchstens 5:1, bevorzugt von höchstens 2:1, besonders bevorzugt von höchstens 1:1, auf.

Begrifflich sei hierzu erläutert, dass insbesondere das Verhältnis zwischen den Kuppen der Erhebungen und der dazwischenliegenden Fläche dieses Verhältnis haben soll. In einer bevorzugten Ausführungsform weisen die Kuppen der Strömungsverwirbelerhebungen eine Oberfläche auf, welche zumindest im wesentlichen einem Umfang entspricht, welche sich also von einer kreisringförmigen Umfassenden, mit senkrecht zur Längserstreckung liegendem Kreisring, umgeben lassen. Auch eine geringfügig von der Umfassenden abweichende Oberflächenkontur an der Erhebung kann jedoch als Kuppe aufgefasst werden. Hierbei sei insbesondere an solche Bereiche der Kuppenflächen gedacht, welche von der kreisförmigen Umfassenden beispielsweise nur höchstens 5 mm radial nach innen abweichen. Alternativ und kumulativ können auch solche Bereiche der Kuppenfläche hierunter verstanden werden, welche beispielsweise nur höchstens ein Viertel, bevorzugt höchstens ein Zehntel, des Radiusunterschieds zwischen größter Erhöhung und tiefstem Kanal von der Umfassenden abweichen.

Die Mantelfläche wird nach diesem Gedanken eingeteilt in Kuppenflächen der Erhebungen und sich dazwischen ausbildenden Kanälen. Zwischen den Summen dieser beiden Flächen sollen die angegebenen Verhältniswerte gelten.

Es hat sich bei Versuchen an Prototypen gezeigt, dass die angegebenen Verhältniswerte zu einer sehr stabilen Polsterströmung bei gleichzeitig nicht zu stark erhöhtem Strömungswiderstand führen können. Bei solchen Verhältnissen ist die Oberfläche des Innenkühlkörpers eher als eine solche Oberfläche aufzufassen, bei welcher aus einer Fläche Strömungsverwirbelerhebungen radial nach außen hervorstehen, als eine solche, bei welcher in eine Oberfläche Furchen eingezogen sind.

Der Innenkühlkörper weitet sich bevorzugt bezüglich seines Mantelumfangs von einem Fußbereich zu einem Kopfbereich auf, insbesondere in Form eines Kegelstumpfs.

Begrifflich sei hinsichtlich der geometrischen Anforderungen an eine "Kegelstumpfform" auf die vorstehenden Ausführungen verwiesen. Ein Kegelstumpf ist eine mathematische Definition eines Raumkörpers. Es sei ausdrücklich darauf hingewiesen, dass es nicht darauf ankommt, diese mathematische Definition exakt oder zumindest im Rahmen der technischen Möglichkeiten zu verwirklichen. Vielmehr stellen sich Vorteile bereits dann ein, wenn eine Aufweitung vom Fuß zum Kopf hin erfolgt. Auch hat sich eine leichte Tonnenform als sehr vorteilhaft herausgestellt.

Ein dergestalt geformter Innenkühlkörper führt zu einer effektiven und die Folie nicht schädigenden Aufweitung des Folienschlauchs.

Bevorzugt weist der Innenkühlkörper eine Mantelfläche auf, welche zumindest zum Teil eine makroskopisch strukturierte Oberfläche mit Strömungsverwirbelerhebungen aufweist. Es wurde vorstehend bereits erläutert, dass Strömungsverwirbelerhebungen in makroskopischen Maßstab, insbesondere von mindestens 5 oder 10 mm Höhe bezüglich einer zwischen ihnen gebildeten Talsohle, bei geeigneter Gestaltung für eine stabile Polsterströmung für den Blasfolienschlauch sorgen können. Der Übergang zwischen den Talsohlen und den Kuppen der Strömungswirbelerhebungen kann nahezu beliebig ausgeformt sein, beispielsweise mit eckigen Übergängen, mit Kehlen, mit größerem oder kleinerem Krümmungsradius oder glatt fließend. Wesentlich ist jedoch, dass sich Strömungswege radial unterhalb der um die Kuppen herum gedachten Mantelfläche ergeben, so dass die Blasluft zum größten Teil frei fließen kann, dass aber zugleich durch die Strömungswirbelerhebungen eine Turbulenz in die Strömung eingebracht wird, eine vorhandene Turbulenz erhöht wird, oder zumindest der Grad der Laminarität reduziert wird.

Bevorzugt sind die Kuppen der Strömungswirbelerhebungen recht ausgeprägt. Es hat sich als vorteilhaft herausgestellt, wenn die Strömungsverwirbelerhebungen eine den Innenkühlkörper umgebende Mantelfläche definieren, wobei sie Kanten mit einem Krümmungsradius von höchstens 3 mm an einem Übergang von den Kuppen zu zwischen ihnen liegenden Kanälen aufweisen. Bei einer solchen Gestaltung liegen die Kuppen der Strömungsverwirbelerhebungen identisch mit der Mantelfläche um sie herum oder nur mit geringen Abweichungen, wobei eine eher scharf gekrümmte Übergangskarte von den Kuppen zu den Seitenwänden der Erhebungen führt, also in die Strömungskanäle hinein.

Die Talsohlen der Strömungskanäle können sehr frei gestaltet werden. Insbesondere können sie U-förmig, V-förmig, mit rechteckigem Querschnitt oder beliebigen anderen Formen ausgestaltet sein.

Es versteht sich, dass ein Innenkühlkörper nach einem der vorstehend beschriebenen Aspekte der Erfindung vorteilhaft für die gesamte Blasfolienanlage ist. Insbesondere lässt sich bei geeigneter Gestaltung ein hoher Durchsatz bei guter Qualität der hergestellten Folie erreichen.

Wenn zusätzlich zum Innenkühlkörper eine Außenkühlung vorgesehen ist, insbesondere mit einem Kaltluftgebläse, lässt sich die Kühlleistung noch weiter steigern. Der vorgestellte Innenkühlkörper ermöglicht es sogar, eine außen auf den Folienschlauch angeordnete Luftströmung vorzusehen, da bei geeigneter Gestaltung des Innenkühlkörpers eine sehr stabile Polsterströmung im Inneren der Blasfolie, also zum Innenkühlkörper hin, hergestellt werden kann.

So kann ein Innenkühlkörper der vorgestellten Art besonders geeignet für ein Verfahren verwendet werden, bei welchem ein Blasfolienschlauch aus einem thermoplastischen Kunststoff hergestellt wird, wobei der Schlauch durch Zufuhr von Blasluft aufgeweitet wird und wobei ein Innenkühlkörper im Inneren des Schlauchs vorgesehen wird und wobei weiterhin eine Polsterströmung zwischen dem Innenkühlkörper und dem Folienschlauch erzeugt wird, die ein Anliegen des Folienschlauchs an den Innenkühlkörper zumindest weitgehend verhindert.

In vorteilhafter Weise kann ein Innenkühlkörper mit einer strukturierten Oberfläche zum Erzeugen einer turbulenten Kühlströmung verwendet werden. Die Struktur des Kühlkörpers kann so gewählt ein, dass eine möglichst hohe Turbulenz der eingeführten Blasluft erzeugt wird. Hierdurch können die laminaren Strömungen von bekannten Verfahren vermieden werden. Eine turbulente Strömung bewirkt in der Regel einen besseren Wärmeübergang zwischen dem Folienschlauch und dem Innenkühlkörper als eine laminare Strömung.

Wenn in weiterer vorteilhafter Ausgestaltung der Erfindung die Stützkraft der Blasluft zwischen dem Innenkühlkörper und der Blasfolie in mindestens einem Umfangsbereich des Kühlkörpers verändert wird, so kann beispielsweise in einem bestimmten Umfangsbereich eine Berührung zwischen der Blasfolie und dem Kühlkörper herbeigeführt werden und nach einem bestimmten Austrittsweg der Blasfolie, gerechnet von der Schlitzdüse aus, durch diese gezielte Berührung eine bestimmte Eigenschaft der Blasfolie erreicht werden. Es ist in den meisten Fällen anzustreben, dass diese Berührung auf dem gesamten Umfang gleichmäßig verteilt ist, so dass der gesamte Folienschlauch in gleichmäßiger Form hinsichtlich der Eigenschaften beeinflusst wird.

Die Menge an Blasluft, die Temperatur und/oder die Feuchtigkeit der Blasluft sind bevorzugt regelbar, um die Kühlung des Blasfolienschlauchs den angestrebten Durchsatzmengen mit einfachen Mitteln anpassen zu können.

Eine Vorrichtung zum Herstellen von Blasfolien aus thermoplastischen Kunststoffen weist meist eine Presse, eine Ringschlitzdüse, eine Abzugsvorrichtung mit Quetschwalzen, einen zwischen Presse- und Abzugsvorrichtung liegenden, mit Wasser gekühlten Kühlkörper, eine Einrichtung zum Zuführen von Blasluft und eine Einrichtung zum Abführen von Luft aus der Folienblase oberhalb des Innenkühlkörpers auf. Bei einer solchen Blasfolienanlage oder bei einem Innenkühlkörper weist dessen Oberfläche bevorzugt eine Oberfläche auf, welche mit untereinander strömungsmäßig verbundenen Strömungswegen versehen ist, beispielsweise mit Nuten, Riefen, Vertiefungen, Furchen oder desgleichen. Eine solche strukturierte Oberfläche kann die zugeführte Blasluft in eine erhöhte Turbulenz versetzen, wodurch eine bessere Innenkühlung der Blasfolie erzielt werden kann.

Eine vorteilhafte Ausgestaltung sieht vor, dass die zwischen den Strömungswegen - also beispielsweise den Nuten, Riefen, Vertiefungen, Furchen oder desgleichen - verbleibenden Teile der Oberfläche des Innenkühlkörpers rautenförmig gestaltet sind, wobei die Längsachse der jeweiligen Raute im wesentlichen in Richtung der Längsachse des Kühlkörpers verläuft. Eine solche Ausgestaltung ermöglicht bei relativ einfacher Herstellung eine Strukturierung der Oberfläche dergestalt, dass die einzelnen zwischen den Rauten verlaufenden Luftströme sich vereinigen und trennen können, so dass bei geeigneter Gestaltung eine sehr hohe Turbulenz erzeugt wird. Dadurch, dass diese Strömungswege zwischen den Rauten strömungsmäßig untereinander verbunden sind, wird ein Stau in der Luftströmung vermieden, der zu einer örtlichen Störung in der gleichmäßigen Aufweitung der Blasfolie führen könnte.

Eine vorteilhafte Ausgestaltung des Innenkühlkörpers sieht vor, dass die Tiefe oder der Querschnitt der Strömungswege - beispielsweise der Nuten, Riefen, Vertiefungen, Furchen oder dergleichen - über die Oberfläche des Kühlkörpers verteilt unterschiedlich ausgebildet sind, wobei bezogen auf einen ausgewählten Umfangsstreifen des Kühlkörpers die Tiefe oder der Querschnitt der Strömungswege untereinander gleich bleibend ausgeführt sind.

Bezogen auf einen bestimmten Umfangsbereich ist es von Vorteil, wenn gleiche Verhältnisse herrschen, damit die Aufweitung der Blasfolie homogen erfolgt. Dagegen kann in Längsrichtung des Innenkühlkörpers eine unterschiedliche Strukturierung vorgesehen sein, insbesondere eine unterschiedliche Tiefe oder ein unterschiedlicher Querschnitt der Strömungswege, um entweder die Folie weiter vom Kühlkörper zu entfernen durch eine erhöhte Polsterströmung, oder aber die Folie näher an den Innenkühlkörper herantreten zu lassen, beispielsweise durch eine Verminderung der Polsterwirkung der Blasluftströmung.

Wenn beispielsweise eine größere Tiefe der Strömungswege - bezogen auf den Umfang um die Kuppen der Erhebungen - zur Verfügung gestellt wird, ist bei geeigneter Gestaltung davon auszugehen, dass aufgrund des erweiterten Strömungsquerschnitts innerhalb der gedachten Mantelfläche die Stützkraft nachlässt und die Blasfolie sich näher an den Kühlkörper annähern kann. Dabei kann es sogar erwünscht sein, dass die Folie eine kurzzeitige Berührung mit dem Kühlkörper eingeht, um ganz bestimmte Beeinflussungen der Eigenschaften der Blasfolie herbeizuführen.

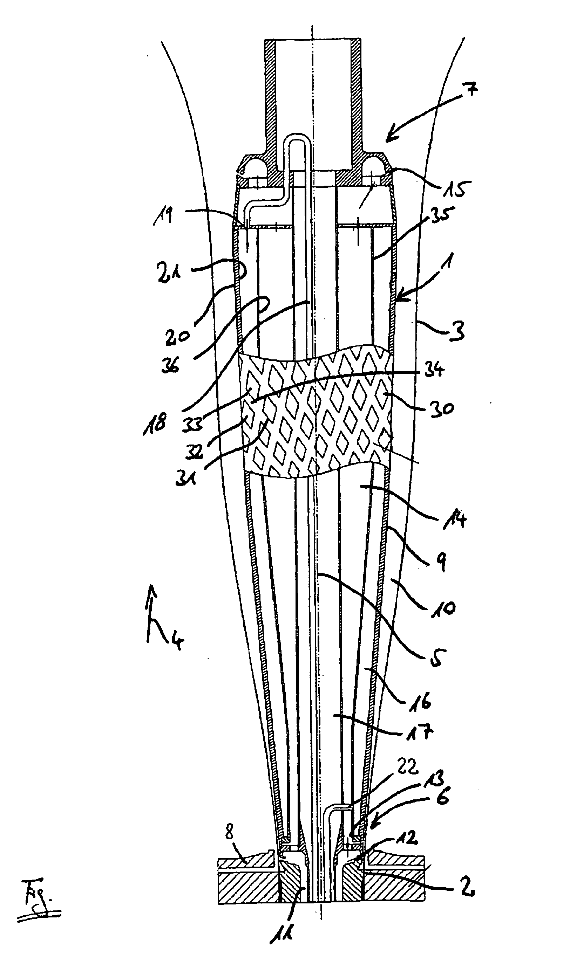

Die Erfindung wird nachstehend anhand eines Ausführungsbeispiels unter Bezugnahme auf die Zeichnung näher erläutert. Dort zeigt
- die einzige Figur: schematisch einen Längsschnitt durch einen Innenkühlkörper, der sich mit einem Fuß an eine Ringschlitzdüse anschließt, und mit einer ihn umgebenden Blasfolie.

Der Innenkühlkörper 1 in der Figur ist Teil einer Blasfolienanlage, in welcher Kunststoff aufgeschmolzen und mittels einer Ringschlitzdüse 2 zu einem Blasfolienschlauch 3 extrudiert und aufgeblasen wird. Der Folienschlauch 3 wird in einer Transportrichtung 4 im wesentlichen parallel zu einer Längsachse 5 des Innenkühlkörpers 1 und somit der gesamten Blasfolienanlage transportiert. Dabei wird der Blasfolienschlauch 3 beginnend bei einem Fußbereich 6 des Innenkühlkörpers 1 vorbei an einem Kopfbereich 7 und darüber hinaus weiter durch Blasluft aufgeweitet.

Im Laufe der Transportrichtung 4 wird der Blasfolienschlauch 3 abgekühlt, so dass er möglichst bald oberhalb eines Blaskopfes 8, in der Praxis meist oberhalb des Kopfbereichs 7 des Innenkühlkörpers 3, erstarrt und flachgelegt werden kann, um anschließend aufgewickelt zu werden.

Für die Kühlung der bewegten Folie des Blasfolienschlauchs 3 wird insbesondere der Innenkühlkörper 1 und bei Bedarf eine Außenkühlung (nicht dargestellt) verwendet. Dies wird über ein Zusammenspiel aus der Oberflächengestaltung des Innenkühlkörpers 1, aus Blasluft und einer Wasserkühlung erreicht:

Der Blasfolienschlauch 3 strömt entlang einer Oberfläche 9 des Innenkühlkörpers 1 mit einem Abstand und überwiegend berührungsfrei vorbei. Dies wird dadurch erreicht, dass in einen Ringspalt 10 zwischen dem Innenkühlkörper 1 und dem Folienschlauch 3 eine polsternde Luftströmung eingeblasen wird. Hierzu ist im Blaskopf 8 eine Druckluftzuführung 11 angeordnet, von welcher aus die dort im Betrieb eingeführte Blasluft zwei Wege nimmt, nämlich zum einen durch einen ersten Austritt 12 zur Innenseite des Blasfolienschlauchs 3 hin, und zum anderen durch einen zweiten Austritt 13 in einen ringförmigen Strömungskanal innerhalb des Innenkühlkörpers 1.

Diejenige Luft, welche durch den ersten Austritt 12 zur Blasfolie 3 hin entweicht, strömt von dort aus den Spalt 10 entlang, wobei diese Luftströmung eine Polsterwirkung zwischen dem Blasfolienschlauch 3 und der Oberfläche 9 des Innenkühlkörpers aufrecht erhält.

Diese polsternde Luftströmung bewegt sich durch den Ringspalt 10 in der Arbeitsrichtung 4 am gesamten Innenkühlkörper 1 entlang, bis sie im Kopfbereich 7 des Innenkühlkörpers 1 die Oberfläche 9 des Innenkühlkörpers 1 verlässt und weiter nach oben innerhalb des Blasfolienschlauchs strömt.

Im wesentlichen parallel zu dieser Strömung stellt sich eine zweite Luftströmung ein, welche durch den zweiten Auslass 13 der Druckluftzuführung 11 in den ringförmigen Strömungsweg 14 im Inneren des Innenkühlkörpers 1 eingetreten ist. Sie ist auch dort im wesentlichen in der Transportrichtung 4 der Blasfolie geströmt und tritt im Kopfbereich 7 des Innenkühlkörpers 1 durch einen Ringspalt 15 aus dem Innenkühlkörper 1 wieder aus. Dort vereinigt sich diese Parallelströmung mit der Polsterströmung des Luftspalts 10 und führt zu einer weiteren Aufweitung des Blasfolienschlauchs 3 oberhalb des Kopfes 7 im Kühlkörper 1. Der Austrittsspalt 15 ist über den Umfang des Innenkühlkörpers 1 recht stark radial ausgerichtet, konkret in einem Winkel von etwa 70 Grad zur Längsachse 5 des Innenkühlkörpers 1. Hierdurch wird unmittelbar im Kopfbereich 7 des Innenkühlkörpers 1 ein radial nach außen wirkender Impuls auf den Blasfolienschlauch 3 ausgeübt.

Die Strömung durch die innere Luftführung 14 kann durch geeignete Gestaltung der beiden Auslässe 12, 13 der Druckluftzufuhr 11 in ihrem Verhältnis zur Polsterströmung durch den Ringspalt 10 eingestellt werden.

Die Polsterströmung im Ringspalt 10, also zwischen der Oberfläche 9 des Innenkühlkörpers 1 und dem Blasfolienschlauch 3, kühlt den Blasfolienschlauch 3 ab. Dies wird dadurch erreicht, dass die dortige Blasluft am Blasfolienschlauch 3 Wärmeenergie aufnimmt und diese an der kühlen Oberfläche 9 des Innenkühlkörpers 1 wieder abgibt. Um die Oberfläche 9 des Innenkühlkörpers 1 möglichst kühl zu halten, ist in einer kreisringförmigen, zur Oberfläche 9 hin flächigen ringspaltförmigen Wasserführung 16 Kühlwasser vorgesehen, welches durch einen zentralen Kanal 17 und eine dort befindliche Wasserleitung 18 in einer Einbringrichtung 19 im Betrieb der Blasfolienanlage ständig erneuert wird. Das Kühlwasser - oder generell das flüssige Kühlmedium - wird auf diese Weise im Gegenstrom zur polsternden Luftströmung im Ringspalt 10 auf der Innenseite eines Mantels 20 des Innenkühlkörpers 1 in Bewegung gehalten. Es entzieht somit dem Mantel 20 des Innenkühlkörpers 1 auf der radialen Innenseite 21 diejenige Wärmeenergie, welche der Mantel 20 auf seiner Oberfläche 9, also der Außenseite, der Polsterströmung aus dem Ringspalt 10 entzogen hat.

Die Wärmeenergie des Blasfolienschlauchs 3 wird auf diese Weise effektiv in die Kühlströmung transportiert und dort in einer Entnahmebohrung 22 aus dem Innenkühlkörper 1 heraus transportiert.

Es versteht sich, dass sowohl die Polsterwirkung der Luftströmung im Ringspalt 10 zwischen Innenkühlkörper 1 und Blasfolienschlauch 3 als auch deren Wärmetransportleistung hin zum Innenkühlkörper 1 von der Qualität und Quantität der Luftströmung abhängt. Auf der Oberfläche 9 des Innenkühlkörpers 1 ist daher eine spezielle räumliche Geometrie angeformt. Konkret ist die gesamte Oberfläche 9 des Innenkühlkörpers 1 mit rautenförmigen Erhebungen versehen. Der Mantel 20 des Innenkühlkörpers 1 ist beispielsweise in dieser Form gegossen worden, oder es wurde aus einem ursprünglich dickeren Mantel eine Kanalgeometrie herausgefräst.

Die einzelnen Rauten 30 stehen als die Luftströmung im Ringspalt 10 verwirbelnde Erhebungen hervor. Ihre rautenförmigen Oberflächen liegen im Umfang des Innenkühlkörpers 1, definieren also die Oberfläche 9 des Mantels 20.

An Seitenkanten 31 der rautenförmigen Erhebungen wendet sich die Außenkontur des Mantels 20 des Innenkühlkörpers 1 mit einem Krümmungsradius von etwa 1 mm bis 2 mm von der Oberfläche zu einer etwa radial nach innen weisenden Wand ab. Es sei ausdrücklich darauf hingewiesen, dass die Dreidimensionalität der rautenförmigen Erhebungen in der Figur nicht dargestellt ist. Die Figur ist eine schematische Darstellung.
Bei einer technischen Zeichnung wären die rautenförmigen Erhebungen als abstehende Körper erkennbar.

Die Seitenwände der rautenförmigen Erhebungen 30 verlaufen über eine Strecke von etwa 1 cm bis 2 cm etwa radial zur Mittelachse 5 des Innenkühlkörpers 1 hin. Zwischen jeweils zwei benachbarten rautenförmigen Erhebungen (exemplarisch mit 32, 33 gekennzeichnet) bilden diese Seitenwände eine im Verlauf offene Talsohle 34 aus. Diese kann beispielsweise tangential um die Mittelachse 5 des Innenkühlkörpers 1 herum verlaufen oder gekrümmt ausgeführt sein, beispielsweise zu einer U-Form zwischen den Wänden der benachbarten rautenförmigen Erhebungen 32, 33.

Durch die makroskopische Oberflächenstruktur der Oberfläche 9 des Innenkühlkörpers 1 in Form der rautenförmigen Erhebungen 30, 32, 33 wird in der Polsterströmung im Ringspalt 10 eine recht große Turbulenz erzeugt. Dies verstärkt die Polsterwirkung und somit die Kraft, welche stützend auf den Blasfolienschlauch 3 ausgeübt wird. Der Blasfolienschlauch 3 kann hierdurch mit einer größeren Geschwindigkeit extrudiert werden, ohne dass die Gefahr besteht, dass er in unkontrolliertem Maße an die Oberfläche 9 des Innenkühlkörpers 1 anschlägt.

Durch die flächige Kühlwasserströmung direkt an der Innenseite des Mantels 20 des Innenkühlkörpers 1, konkret in der doppelmanteligen Führung zwischen der Außenwand 20 und einer Innenwand 35, wird die Wärme vom Blasfolienschlauch effektiv abtransportiert. Gleichzeitig erfährt diese Wasserkühlung dadurch eine Unterstützung, dass sie auf ihrer radialen Innenseite 36 von Blasluft passiert wird.

Mit anderen Worten wird die Blase des Folienschlauchs, die aus der Ringschlitzdüse austritt, über die polsternde Luftströmung vom flaschenartigen Innenkühlkörper ferngehalten. Zwischen dem Mantel, also der Außenwand des Kühlkörpers, und der Innenwand entsteht der ringförmige Zwischenraum, in welchen zur Kühlung des Kühlkörpers ein Kühlmedium einführbar ist, beispielsweise Wasser. Dieses Kühlmedium wird über die Leitung zugeführt und über die Entnahmeleitung am unteren Ende des Kühlkörpers wieder abgeführt.

Die Oberfläche des Innenkühlkörpers ist mit Rauten versehen, zwischen welchen im Verlauf offene Strömungswege bestehen, die untereinander verbunden sind. Die Längsachse der Rauten verläuft im wesentlichen in Längsrichtung des Kühlkörpers. Die Strömungswege sind durch Nuten, Riefen, Vertiefungen, Furchen oder dergleichen gebildet. Ein Kühlring führt an die Außenseite der Folienblase Luft heran, um diese zusätzlich zur Innenkühlung auch außen kühlen zu können. Im oberen Bereich des Kühlkörpers ist ein Austrittsschlitz für die im inneren der Ringschlitzdüse zugeführte Luft vorgesehen, die nach dem Kühlkörper zu einer weiteren Aufweitung der Folienblase führt. Diese weitere Luftzuführung kann vom Volumen her wesentlich größer sein als diejenige, die durch die Schlitzdüse am unteren Ende des Kühlkörpers bewirkt wird.

Die Luftströmungswege sind bezogen auf einen bestimmten Umfangsbereich gleichförmig ausgebildet, damit auf dem Umfang der Folienblase gesehen keine unterschiedlichen Beeinflussungen stattfinden. Jedoch können die Luftströmungswege in Längsrichtung des Kühlkörpers unterschiedlich ausgebildet sein, um beispielsweise bei größerer Tiefe und größerem Querschnitt der zwischen Kühlkörper und Folienblase strömenden Luft eine Ausweichmöglichkeit zu schaffen und damit die Stützkraft der Luft herabzusenken, so dass eine stärkere Annäherung in Richtung auf den Kühlkörper stattfinden kann. Werden diese Luftströmungswege weniger tief ausgeführt, dann erhöht sich die Stützkraft der Luft, und die Folie wird weiter weg vom Kühlkörper gedrängt.

## Patentansprüche

1. Innenkühlkörper (1) für eine Blasfolienanlage mit einer Mantelfläche (9), wobei sich die Mantelfläche von einem Fußbereich (6) zu einem Kopfbereich (7) hin aufweitet und wobei über ihren Verlauf offene Strömungskanäle (34) in der Mantelfläche (9) vorgesehen sind, deren Verlauf sich zumindest über einen Teil einer Längserstreckung (5) des Innenkühlkörpers (1) erstreckt.

2. Innenkühlkörper nach Anspruch 1, ***gekennzeichnet durch*** eine Vielzahl von Strömungsverwirbelerhebungen (30) mit Kanäle (34) begrenzenden Seiten (31).

3. Innenkühlkörper nach einem der Ansprüche 1 oder 2, ***gekennzeichnet durch*** eine Vielzahl von Strömungsverwirbelerhebungen (30) in Form von bezüglich einer Längserstreckung (5) des Innenkühlkörpers (1) schräg liegenden Rauten.

4. Innenkühlkörper nach einem der vorhergehenden Ansprüche, ***gekennzeichnet durch*** eine Vielzahl von Strömungsverwirbelerhebungen (30), welche in Reihen um einen Mantelumfang (9) angeordnet sind, und zwar in mehr als zwanzig Reihen über eine Länge des Innenkühlkörpers (1), bevorzugt in mehr als dreißig Reihen, besonders bevorzugt in mehr als vierzig Reihen.

5. Innenkühlkörper nach einem der vorhergehenden Ansprüche, ***gekennzeichnet durch*** ein Flächenverhältnis zwischen Strömungsverwirbelerhebungen (30) und bezüglich eines um diese definierten Mantelumfangs (9) vorgesehenen Eintiefungen (34) von höchstens 5:1, bevorzugt von höchstens 2:1, besonders bevorzugt von höchstens 1:1.

6. Innenkühlkörper nach einem der vorhergehenden Ansprüche, ***da durch gekennzeichnet, dass*** sich der Mantelumfang in Form eines Kegelstumpfes aufweitet.

7. Innenkühlkörper nach einem der vorhergehenden Ansprüche, ***dadurch gekennzeichnet, dass*** eine Manteloberfläche zumindest zum Teil eine makroskopisch strukturierte Oberfläche (9) mit Strömungsverwirbelerhebungen (30) aufweist.

8. Innenkühlkörper nach Anspruch 7, ***dadurch gekennzeichnet, dass*** die Strömungsverwirbelerhebungen (30) eine den Innenkühlkörper umgebende Mantelfläche definieren, wobei sie Kanten (31) mit einem Krümmungsradius von höchstens 3 mm an einem Übergang zu Kanälen (34) aufweisen.

9. Blasfolienanlage mit einem Innenkühlkörper nach einem der vorhergehenden Ansprüche.

10. Blasfolienanlage nach Anspruch 9, ***dadurch gekennzeichnet, dass*** eine Außenkühlung vorgesehen ist, insbesondere mit einem Kaltluftgebläse.

11. Verfahren zum Herstellen eines Blasfolienschlauchs (3) aus einem thermoplastischen Kunststoff, wobei der Schlauch durch Zufuhr von Blasluft aufgeweitet wird, ***dadurch gekennzeichnet, dass*** ein Innenkühlkörper (1) nach einem der Ansprüche 1 bis 8 im Inneren des Schlauchs vorgesehen wird und dass eine Polsterströmung zwischen dem Innenkühlkörper (1) und dem Folienschlauch (3) durch offene Strömungskanäle in der Mantelfläche des Innenköhlkörpers erzeugt wird, welche ein Anliegen des Folienschlauchs (3) an den Innenkühlkörper (1) zumindest weitgehend verhindert.

## Claims

1. A cooling mandrel (1) for a blown film extrusion die station with an outer circumferential surface (9), said outer circumferential surface flaring from a base region (6) to a top region (7), flow channels (34) being provided in said outer circumferential surface (9), which are open over their courses and which extend at least over part of a longitudinal extension (5) of the cooling mandrel (1).

2. The cooling mandrel as set forth in claim 1, ***characterized by*** a plurality of flow-swirling raised portions (30) with sides (31) which define channels (34).

3. The cooling mandrel as set forth in any one of the claims 1 or 2, ***characterized by*** a plurality of flow-swirling raised portions (30) in the form of lozenges, which are inclined with respect to a longitudinal extension (5) of the cooling mandrel (1).

4. The cooling mandrel as set forth in any one of the previous claims, ***characterized by*** a plurality of flow-swirling raised portions (30) which are arranged in rows over the outer circumference (9), namely in more than twenty rows over a length of the cooling mandrel (1), preferably in more than thirty rows, in particular preferably in more than forty rows.

5. The cooling mandrel as set forth in any one of the previous claims, ***characterized by*** an area ratio between flow-swirling raised portions (30) and depressions (34) provided with respect to an outer circumference (9) defined about said flow-swuling raised portions, said ratio being no more than 5:1, preferably no more than 2:1, a ratio of no more than 1:1 being particularly preferred.

6. The cooling mandrel as set forth in any one of the previous claims, ***characterized in that*** the outer circumference flares in the form of a truncated cone.

7. The cooling mandrel as set forth in any one of the previous claims, ***characterized in that*** an outer circumferential surface comprises at least in parts a macroscopically structured surface (9) with flow-swirling raised portions (30).

8. The cooling mandrel as set forth in claim 7, ***characterized in that*** the flow-swirling raised portions (30) define an outer circumferential surface surrounding said cooling mandrel, said flow-swirling raised portions having edges (31) with a radius of curvature of no more than 3 mm at a transition to the channels (34).

9. A blown film extrusion die with a cooling mandrel as set forth in any one of the previous claims.

10. The blown film extrusion die as set forth in claim 9, ***characterized in that*** there is provided an external cooling, in particular with a cold air fan.

11. A method of manufacturing a blown film tube (3) from a thermoplastic, said tube being widened by supplying blown air, ***characterized in that*** a cooling mandrel (1) as set forth in any one of the claims 1 through 8 is provided inside said tube and that a buffer flow is generated between said cooling mandrel (1) and the film tube (3) through open flow channels made in the outer circumferential surface of the cooling mandrel, said buffer flow preventing, at least to a large extent, the film tube (3) from coming to rest against the cooling mandrel (1).

## Revendications

1. Mandrin de refroidissement (1) pour un dispositif d'extrusion soufflage de feuilles avec une surface extérieure (9), cette surface extérieure s'évasant depuis une partie basse (6) vers une partie haute (7) et des canaux de flux (34) ouverts étant prévus dans la surface extérieure (9) tout le long de celle-ci, cette surface extérieure s'étendant du moins sur une partie d'une extension longitudinale (5) du mandrin de refroidissement (1).

2. Mandrin de refroidissement selon la revendication 1, ***caractérisé par*** une pluralité de proéminences (30) de mise en turbulence du flux avec des faces (31) définissant des canaux (34).

3. Mandrin de refroidissement selon l'une quelconque des revendications 1 ou 2, ***caractérisé par*** une pluralité de proéminences (30) de mise en turbulence du flux sous forme de losanges inclinés par rapport à une extension longitudinale (5) du mandrin de refroidissement (1).

4. Mandrin de refroidissement selon l'une quelconque des revendications précédentes, ***caractérisé par*** une pluralité de proéminences (30) de mise en turbulence du flux qui sont disposées en rangs sur une circonférence extérieure (9), notamment sur plus de vingt rangs répartis sur une longueur du mandrin de refroidissement (1), de préférence sur plus de trente rangs, une préférence particulière étant accordée à un nombre de rangs supérieur à quarante.

5. Mandrin de refroidissement selon l'une quelconque des revendications précédentes, ***caractérisé par*** un rapport de section entre des proéminences (30) de mise en turbulence du flux et des renfoncements (34) prévus par rapport à une circonférence extérieure (9) définie autour de celles-ci, ce rapport ne dépassant pas 5:1, de préférence ne dépassant pas 2:1, une préférence particulière étant accordée à un rapport ne dépassant pas 1 :1.

6. Mandrin de refroidissement selon l'une quelconque des revendications précédentes, ***caractérisé en ce que*** la circonférence extérieure s'évase en forme de tronc de cône.

7. Mandrin de refroidissement selon l'une quelconque des revendications précédentes, ***caractérisé en ce* qu'**une surface extérieure comporte au moins en partie une surface (9) de structure macroscopique avec des proéminences (30) de mise en turbulence du flux.

8. Mandrin de refroidissement selon la revendication 7, ***caractérisé en ce que*** les proéminences (30) de mise en turbulence du flux définissent une surface extérieure entourant le mandrin de refroidissement, ces proéminences comportant des bords (31) présentant un rayon de courbure inférieur à 3 mm dans une zone de transition vers les canaux (34).

9. Dispositif d'extrusion soufflage de feuilles avec un mandrin de refroidissement selon l'une quelconque des revendications précédentes.

10. Mandrin de refroidissement selon la revendication 9, ***caractérisé en ce qu'**il* est prévu un refroidissement extérieur, notamment avec un ventilateur d'air froid.

11. Procédé de réalisation d'une gaine (3) obtenue par extrusion soufflage d'une matière thermoplastique, la gaine étant gonflée par injection d'air de soufflage, ***caractérisé en ce que*** l'on prévoit à l'intérieur de la gaine un mandrin de refroidissement (1) selon une quelconque des revendications 1 à 8 et qu'un flux tampon passant au travers de canaux de flux ouverts ménagés dans la surface extérieure du mandrin de refroidissement est généré entre le mandrin de refroidissement (1) et la gaine (3) pour empêcher, du moins en grande partie, la gaine (3) de venir se plaquer contre le mandrin de refroidissement (1).
